# DEMANDE DE BREVET EUROPEEN

(11) **EP 1 990 924 A1**
(43) Date de publication de la demande: **12.11.2008**
(21) Numéro de dépôt: 07301031.6
(22) Date de dépôt: 11.05.2007
(51) Int. Cl.: H04B 1/40, H02J 7/34

(54) **Alimentation à pile pour émetteur radiofréquences**

(71) Demandeur: Actaris SAS, 92100 Boulogne Billancourt (FR)
(72) Inventeur: Baaziz, Khaled, 69100, Villeurbanne (FR); Dury, Hervé, 71850, Charnay Les Macon (FR); Rigomier, Vincent, 71118, Saint Martin Belle Roche (FR)
(74) Mandataire: Hervouet, Sylvie

(57) **Abrégé**

L'invention concerne une alimentation pour module émetteur radiofréquences (3) comportant au moins une pile (1) et un circuit (2') de stockage d'énergie apte à délivrer un pic de courant audit module. Selon l'invention, le circuit de stockage comporte un condensateur standard, et le dispositif d'alimentation comporte :
- des moyens interrupteurs (6, 7) commandés en opposition par un module de contrôle (8) pour être simultanément l'un ouvert, l'autre fermé selon que l'on se trouve dans la phase de charge ou de décharge du condensateur (2') ;
- un moyen (4) élévateur de tension en amont du condensateur pour charger ce condensateur à une tension de stockage (Vs) supérieure à la tension (Vp) de la pile (1);
- un moyen (5) abaisseur de tension en aval du condensateur (2') pour abaisser la tension de stockage (Vs) à une valeur prédéterminée (Vc) de tension d'alimentation délivrée au module (3).

## Description

La présente invention concerne les modules émetteurs radiofréquences dont l'alimentation est réalisée au moyen d'au moins une pile.

Un domaine d'application particulièrement concerné par l'invention, bien que non limitatif, est celui des modules radio utilisés dans le relevé à distance, ou télérelevé, des compteurs d'énergie, du type compteurs d'eau, d'énergie thermique, de gaz ou d'électricité.

Dans ce domaine d'application, la consommation moyenne d'énergie utilisée reste assez faible, ce qui permet en général d'utiliser des piles de faible capacité et de petite taille, par exemple une pile AA de 3,6 Volts. Cependant, au moment où le module transmet un signal radiofréquence, la pile doit être capable de fournir sur une courte durée, par exemple de l'ordre de la minute, un courant instantané assez élevé (de l'ordre de quelques centaines de mA). La puissance requise à ce moment peut être incompatible avec l'utilisation d'une pile de petite taille et de faible capacité, et il est souvent nécessaire de trouver un compromis entre la puissance à délivrer, la taille de la pile, la gamme de température d'utilisation, ainsi que la durée de vie du module, de façon à garantir les caractéristiques de la pile pendant la durée d'exploitation du module.

De plus, l'impédance interne de la pile va induire une chute de tension d'autant plus importante que le pic de courant est élevé, et l'on recherche ainsi généralement à utiliser des piles présentant des impédances internes les plus faibles possible.

Une première solution consiste à surdimensionner la pile. Cette solution est bien entendu non avantageuse non seulement en terme d'encombrement, mais aussi en terme d'efficacité puisque dans ce cas, seule une partie de la capacité disponible de la pile sera utilisée, le reste n'étant d'aucune utilité.

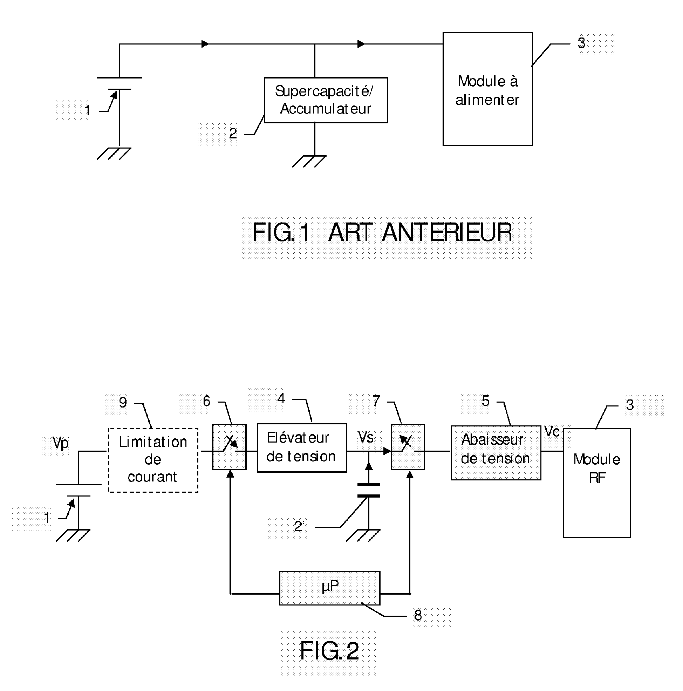

Une autre solution connue, représentée schématiquement sur la figure 1, consiste à associer une pile 1 à un circuit d'assistance 2 comprenant un accumulateur ou un ou plusieurs super condensateurs, ce circuit d'assistance 2 étant connecté en permanence en parallèle entre la pile 1 et le module émetteur radiofréquence 3 à alimenter. En dehors des phases d'émission, le circuit d'assistance 2 est constamment chargé de manière à pouvoir délivrer la puissance qu'il a accumulée au moment de la transmission, tout en limitant la puissance que doit fournir la pile 1 au moment du pic de courant.

Cette solution comporte cependant un certains nombres d'inconvénients :

Tout d'abord, les composants mis en jeu dans ces circuits d'assistance sont onéreux et difficiles à trouver sur le marché pour les valeurs requises.

En outre, la fiabilité des composants n'est pas garantie pour des durées de fonctionnement de plusieurs années, voire de plusieurs dizaines d'années, correspondant à la durée de vie classique garantie pour les modules de télérelevé. De plus, leurs performances se dégradent rapidement avec le temps. Notamment, leur résistance en série équivalente (ESR) augmente avec le temps, ce qui limite leur efficacité au moment où le pic de courant doit être délivré.

De plus, ces composants présentent en général un courant de fuite important, ce qui contraint à surdimensionner la pile pour pallier à la perte d'énergie résultante.

Enfin, pour les valeurs mises en jeu, les super condensateurs utilisés dans les solutions restent des composants d'encombrement non optimisé.

La présente invention a pour but de proposer un dispositif d'alimentation à pile pour module d'émission radiofréquence ne présentant pas les différents inconvénients mentionnés ci-dessus.

Ce but est atteint selon l'invention qui propose un dispositif d'alimentation pour un module émetteur radiofréquences comportant au moins une pile et un circuit de stockage d'énergie électriquement connecté en parallèle entre la pile et le module émetteur radiofréquences apte à délivrer un pic de courant audit module, caractérisé en ce que le circuit de stockage comporte un condensateur standard, et en ce que ledit dispositif d'alimentation comporte en outre :
- un premier moyen interrupteur en série entre la pile et le circuit de stockage d'énergie et un deuxième moyen interrupteur en série entre le circuit de stockage d'énergie et le module émetteur radiofréquences, les premier et deuxième moyens interrupteurs étant commandés par un module de contrôle pour être simultanément soit dans un état respectivement fermé et ouvert lors d'une phase de charge du condensateur, soit dans un état respectivement ouvert et fermé lors d'une phase de décharge du condensateur;
- un moyen élévateur de tension en série entre la pile et le circuit de stockage d'énergie pour charger ledit condensateur à une tension de stockage supérieure à la tension délivrée par la pile pendant ladite phase de charge ;
- un moyen abaisseur de tension en série entre le circuit de stockage et le module émetteur radiofréquences pour abaisser la tension de stockage à une valeur prédéterminée de tension d'alimentation délivrée au module pendant ladite phase de décharge.

L'invention a également pour objet un module de télérelevés pour compteur d'énergie, comportant un tel dispositif d'alimentation.

L'invention et les avantages qu'elle procure seront mieux compris au vu de la description ci-après d'un exemple de réalisation préféré d'un dispositif d'alimentation conforme à l'invention, faite en référence aux figures annexées dans lesquelles :
- la figure 1 illustre schématiquement un dispositif d'alimentation à pile pour émetteur radiofréquences selon l'art antérieur ;
- la figure 2 illustre schématiquement un dispositif d'alimentation à pile pour émetteur radiofréquences selon la réalisation préférée de l'invention.

Le principe général de l'invention consiste à charger un condensateur standard à une tension de stockage supérieure à la tension de la pile, puis de délivrer le pic de courant à la fin de la charge, à une tension inférieure à la tension de stockage du condensateur.

Dans le dispositif d'alimentation conforme à l'invention représenté schématiquement sur la figure 2, on retrouve, comme dans le cas du dispositif connu de la figure 1, une pile 1 et un circuit 2' de stockage d'énergie électriquement connecté en parallèle entre la pile 1 et le module émetteur radiofréquences 3 apte à délivrer un pic de courant audit module. La pile 1 est par exemple une pile AA de tension 3,6 Volts. Selon une caractéristique importante de l'invention, le circuit de stockage d'énergie comporte ici un condensateur standard. Par rapport aux dispositifs connus utilisant des super condensateurs, un condensateur standard présente l'avantage non seulement d'être d'encombrement plus faible, mais aussi d'accepter des tensions maximum de stockage beaucoup plus élevées (de l'ordre de 40 Volts contre 2,5 Volts pour un super condensateur de 1 mF). Il en résulte la possibilité, pour une même valeur de capacité, de stocker plus d'énergie, puisque celle-ci est proportionnelle au carré de la tension de stockage. De plus, les condensateurs standard présentent une meilleure fiabilité, et leur vieillissement est mieux maîtrisé.

Un moyen 4 élévateur de tension est connecté en série entre la pile 1 et le condensateur 2' de manière à permettre la charge du condensateur 2' à une tension de stockage Vs supérieure à la tension Vp délivrée par la pile 1, par exemple de l'ordre de 25 Volts. Le moyen élévateur 4 est avantageusement un convertisseur de tension continu - continu (convertisseur DC-DC).

Un moyen 5 abaisseur de tension est quant à lui connecté en série entre le condensateur 2' et le module émetteur radiofréquences 3 pour abaisser la tension de stockage Vs à une valeur prédéterminée de tension d'alimentation Vc délivrée au module 3 pendant une phase de décharge correspondant à la délivrance du pic de courant. Grâce à l'utilisation du moyen 5 abaisseur de tension, il est possible d'obtenir, en sortie de l'abaisseur, la valeur de tension la plus efficace possible pour le module à alimenter.

Le moyen abaisseur 5 de tension peut être un convertisseur de tension continu - continu (convertisseur DC-DC) ou un régulateur de tension linéaire.

Le dispositif d'alimentation comporte en outre des moyens interrupteur 6, 7 pilotés par un module 8 de contrôle, par exemple un microprocesseur, de façon à commander le déclenchement des phases de charge et de décharge du condensateur 2'. Plus précisément, un premier moyen interrupteur 6 est placé en série entre la pile 1 et le condensateur 2', de préférence en amont de l'élévateur de tension 4, et un deuxième moyen interrupteur 7 est placé en série entre le condensateur 2' et le module émetteur radiofréquences 3, de préférence en amont de l'abaisseur de tension 5. Ces premier et deuxième moyens interrupteurs 6, 7 sont commandés par le module de contrôle 8 pour être simultanément dans un état contraire, c'est-à-dire :
- soit dans un état respectivement fermé et ouvert lors d'une phase de charge du condensateur,
- soit dans un état respectivement ouvert et fermé lors de la phase de décharge du condensateur.

De plus, dans la mesure où, dans le domaine d'application envisagé des modules de télérelevés, les instants auxquels une puissance instantanée importante est requise au niveau de l'alimentation du module sont connus à l'avance, le module de contrôle est adapté de préférence pour déclencher la fermeture du moyen interrupteur 6 et l'ouverture du moyen interrupteur 7 juste avant la délivrance du pic de courant, à un instant néanmoins suffisamment antérieur à l'instant de délivrance du pic de courant pour permettre la charge complète du condensateur 2'.

De cette manière, on évite les pertes liées au courant de fuite du condensateur 2'.

De façon optionnelle, le dispositif d'alimentation peut en outre comporter un moyen 9 de limitation du courant délivré par la pile 1, connecté en série entre la pile 1 et l'élévateur de tension 4, de préférence en amont du moyen interrupteur 6. Cette précaution évite de stresser la pile, c'est-à-dire de tirer un courant trop fort lors de la phase de charge du condensateur. Typiquement, les moyens de limitation de courant permettront de délivrer un courant entre 1 et 5 mA. Ainsi, l'impédance interne de la pile n'est plus une contrainte car la chute de tension correspondante, compte tenu du courant limité, est très faible.

Grâce au dispositif d'alimentation selon l'invention, on minimise en outre l'énergie résiduelle restant stockée dans le condensateur 2' une fois que le module radiofréquences 3 a puisé l'énergie nécessaire à son fonctionnement. Dans une variante particulièrement avantageuse de l'invention, on peut même rendre le rapport entre l'énergie résiduelle et l'énergie initialement stockée dans le condensateur 2' quasi égal à 1 en utilisant un moyen abaisseur de tension 7 adapté pour abaisser dans un premier temps la tension de stockage Vs, puis à basculer dans un fonctionnement élévateur de tension dès que la tension d'entrée du moyen 5 devient inférieure à la valeur prédéterminée de tension d'alimentation. Cette disposition permet donc de puiser un maximum d'énergie disponible dans le condensateur 2'. On peut par conséquent utiliser des piles de capacité moindre, et de fait moins encombrantes et moins coûteuses.

## Revendications

1. Dispositif d'alimentation pour un module émetteur radiofréquences (3) comportant au moins une pile (1) et un circuit (2') de stockage d'énergie électriquement connecté en parallèle entre la pile (1) et le module émetteur radiofréquences (3) apte à délivrer un pic de courant audit module, **caractérisé en ce que** le circuit de stockage comporte un condensateur standard, et **en ce que** ledit dispositif d'alimentation comporte en outre :
- un premier moyen interrupteur (6) en série entre la pile (1) et le circuit (2') de stockage d'énergie et un deuxième moyen interrupteur (7) en série entre le circuit (2') de stockage d'énergie et le module émetteur radiofréquences (3), les premier (6) et deuxième (7) moyens interrupteurs étant commandés par un module de contrôle (8) pour être simultanément soit dans un état respectivement fermé et ouvert lors d'une phase de charge du condensateur (2'), soit dans un état respectivement ouvert et fermé lors d'une phase de décharge du condensateur (2') ;
- un moyen (4) élévateur de tension en série entre la pile (1) et le circuit (2') de stockage d'énergie pour charger ledit condensateur à une tension de stockage (Vs) supérieure à la tension (Vp) délivrée par la pile (1) pendant ladite phase de charge ;
- un moyen (5) abaisseur de tension en série entre le circuit de stockage (2') et le module émetteur radiofréquences (3) pour abaisser la tension de stockage (Vs) à une valeur prédéterminée (Vc) de tension d'alimentation délivrée au module (3) pendant ladite phase de décharge.

2. Dispositif d'alimentation selon la revendication 1, **caractérisé en ce qu'**il comporte en outre un moyen (9) de limitation de courant en série entre la pile (1) et le moyen (4) élévateur de tension.

3. Dispositif d'alimentation selon l'une quelconque des revendications précédentes, **caractérisé en ce que** le premier moyen (6) interrupteur est connecté en série entre la pile (1) et le moyen (4) élévateur de tension.

4. Dispositif d'alimentation selon l'une quelconque des revendications précédentes, **caractérisé en ce que** le moyen (4) élévateur de tension est un convertisseur de tension continu-continu.

5. Dispositif d'alimentation selon l'une quelconque des revendications précédentes, **caractérisé en ce que** le moyen (5) abaisseur de tension est un convertisseur de tension continu-continu.

6. Dispositif d'alimentation selon l'une quelconque des revendications 1 à 4, **caractérisé en ce que** le moyen (5) abaisseur de tension est un régulateur linéaire de tension.

7. Dispositif d'alimentation selon l'une quelconque des revendications 1 à 4, **caractérisé en ce que** le moyen (5) abaisseur de tension est adapté pour basculer dans un fonctionnement élévateur de tension dès que la tension d'entrée du moyen (5) abaisseur de tension devient inférieure à la valeur prédéterminée de tension d'alimentation (Vc).

8. Dispositif d'alimentation selon l'une quelconque des revendications précédentes, **caractérisé en ce que** le module de contrôle (8) est adapté pour déclencher ladite phase de charge juste avant la délivrance du pic de courant, à un instant suffisamment antérieur à l'instant de délivrance du pic de courant pour permettre la charge complète du condensateur (2').

9. Module de télérelevés pour compteur d'énergie, **caractérisé en ce qu'**il comporte un dispositif d'alimentation selon l'une quelconque des revendications 1 à 8.
